# EUROPÄISCHE PATENTSCHRIFT

(11) **EP 3 085 494 B1**
(45) Veröffentlichungstag und Bekanntmachung des Hinweises auf die Patenterteilung: **05.07.2017**
(21) Anmeldenummer: 15165049.6
(22) Anmeldetag: 24.04.2015
(51) Int. Cl.: B24B 41/02, B24B 41/00, B24B 7/06, B23Q 7/03

(54) **VORRICHTUNG UND VERFAHREN ZUR BEARBEITUNG VON AUF BELAGTRÄGERN MONTIERTEN BREMSBELÄGEN**
DEVICE AND METHOD FOR PROCESSING BRAKE PADS FITTED ON PAD HOLDERS
DISPOSITIF ET PROCÉDÉ DE TRAITEMENT DE GARNITURES DE FREIN MONTÉES SUR DES PLAQUETTES SUPPORTS

(43) Veröffentlichungstag der Anmeldung: 26.10.2016
(73) Patentinhaber: Ferdinand Erlmann Werkzeugbau GmbH & Co., 45699 Herten (DE)
(72) Erfinder: Schorn, Gerd, 45699 Herten (DE)
(74) Vertreter: Freischem & Partner Patentanwälte mbB

(56) Entgegenhaltungen:
- KR-B1- 100 985 964
- US-A- 4 149 620
- US-A- 4 881 633

## Beschreibung

Die Erfindung betrifft eine Vorrichtung und ein Verfahren zur Bearbeitung von auf Belagträgern montierten Bremsbelägen mit einer Fördereinrichtung zur kontinuierlichen und automatisierten Bewegung zu bearbeitender Bremsbeläge und mindestens einer Bearbeitungsstation. Der Begriff Montieren soll vorliegend insbesondere auch ein Fixieren im Sinne von Kleben sowie beliebige sonstige Verbindungstechniken umfassen. Solche Vorrichtungen werden insbesondere eingesetzt, um nach dem Verbinden von Belagträger und Bremsbelag den Bremsbelag auf ein exaktes, gewünschtes Maß zu bringen und ggf. noch weitere Arbeiten an dem Bremsbelag durchzuführen, beispielsweise das Anbringen von Fasen an Kanten oder das Einbringen von Rillen oder sonstigen Ausnehmungen. Solche Vorrichtungen umfassen meist mehrere, hintereinander angeordnete Bearbeitungsstationen, wie beispielsweise Schleifstationen, wobei die Fördereinrichtung die Bremsbeläge mit einer - meist konstanten - Geschwindigkeit durch die Bearbeitungsstationen bewegt. Die Vorrichtung soll insbesondere der schleifenden Bearbeitung von auf Belagträgern montierten Bremsbelägen dienen, beispielsweise Scheibenbremsbelägen von Kraftfahrzeugen. Mit kontinuierlicher und automatisierter Bearbeitung ist gemeint, dass es die Fördereinrichtung ermöglicht, eine Vielzahl von Bremsbelägen, vorzugsweise in regelmäßigen Abständen, aufzunehmen, um eine Vielzahl von Bremsbelägen mittels einer umlaufenden Fördereinrichtung durch die Bearbeitungsstationen zu fördern.

Aus US 4,149,620 A, die die Basis für den Oberbegriff des Anspruchs 1 bildet und US 4,881,633 sind allgemein beschriebene Fördereinrichtungen mit Kettenantrieb und Platten zur Anordnung nicht näher spezifizierter Werkstücke bekannt. Auf eine Bearbeitung von auf Belagträgern montierten Bremsbelägen wird in diesen Dokumenten nicht Bezug genommen.

Aus KR 10-1089333 B1 ist eine Vorrichtung zur Bearbeitung von Scheibenbremsbelägen mit mehreren hintereinander angeordneten Bearbeitungsstationen bekannt, welche eine Fördereinrichtung zur kontinuierlichen und automatisierten Bewegung der zu bearbeitenden Bremsbeläge umfasst. Die Bremsbeläge werden dazu auf sogenannten "sliding rails" angeordnet, zwischen als "side rails" bezeichneten seitlichen Führungsschienen seitlich geführt und von sogenannten "pushing bars" von der Rückseite aus angetrieben. Um die Bremsbeläge während der Förderung und Bearbeitung sicher auf den Gleitschienen zu halten, werden diese magnetisiert und mittels Magnetkraft in Richtung Gleitschienen gehalten.

Eine weitere, ähnlich aufgebaute Vorrichtung ist in KR 10-0985964 B1 beschrieben.

Der Erfindung liegt die Aufgabe zugrunde, eine Vorrichtung und ein Verfahren zur Bearbeitung von Bremsbelägen zur Verfügung zu stellen, die eine sichere, wartungsarme und effiziente Bearbeitung von auf Belagträgern montierten Bremsbelägen ermöglichen.

Die Lösung der Aufgabe erfolgt mit einer Vorrichtung und mit einem Verfahren mit den Merkmalen der unabhängigen Ansprüche. Weitere praktische Ausführungsformen sind in Verbindung mit den abhängigen Ansprüchen beschrieben.

Eine erfindungsgemäße Vorrichtung zur Bearbeitung von auf Belagträgern montierten Bremsbelägen mit mindestens einer Bearbeitungsstation sowie einer Fördereinrichtung zur kontinuierlichen und automatisierten Bewegung zu bearbeitender Bremsbeläge in einer zumindest abschnittsweise geradlinigen Förderrichtung F umfasst die Fördereinrichtung mehrere, von der Fördereinrichtung umlaufend angetriebene Auflageflächen zur Anordnung von Belagträgern der zu bearbeitenden Bremsbeläge und mit den Auflageflächen umlaufende Positioniermittel, die einer Verdrehung der Belagträger entgegenwirken, insbesondere um eine senkrecht auf die Förderebene stehende Achse. Ferner übt die mindestens eine Bearbeitungsstation zumindest teilweise gegen die Förderrichtung F wirkende Bearbeitungskräfte auf die zu bearbeitenden Bremsbeläge aus. Die Positioniermittel sind derart gestaltet, dass die Lage des Belagträgers auf der Auflagefläche bei Einwirkung der Bearbeitungskräfte aufgrund der Positioniermittel eindeutig vorgegeben ist. Die Positioniermittel umfassen mindestens eine rückseitige Begrenzungswand, die sich zumindest teilweise quer zur Förderrichtung F und von der Auflagefläche nach oben erstreckt und der Anlage an einer ersten Referenz-Seitenfläche des Belagträgers dient, sowie mindestens zwei seitliche Begrenzungswände, die sich zumindest teilweise in Richtung der Förderrichtung F und von der Auflagefläche nach oben erstrecken und deren Geometrien und Abstand an zweite Referenz-Seitenflächen des Belagträgers angepasst sind.

Wenn in horizontaler Richtung gefördert wird, soll das mindestens eine Positioniermittel einer Verdrehung der auf der Auflagefläche aufliegenden Bremsbeläge um die Vertikale, d.h. eine sich in Richtung der Schwerkraft g erstreckenden Achse, entgegenwirken. Eine erfindungsgemäße Vorrichtung hat den Vorteil, dass ein auf einer Auflagefläche aufliegender Belagträger durch mindestens ein Positioniermittel gegen Verdrehung gesichert ist. Dabei ist es nicht erforderlich, dass das mindestens eine Positioniermittel eine Verdrehung des Belagträgers gegenüber der Auflagefläche unmöglich macht. Es ist vielmehr ausreichend, wenn einer Verdrehung des Belagträgers bei bestimmungsgemäßem Gebrauch der erfindungsgemäßen Vorrichtung entgegenwirkt, d.h. wenn eine Verdrehung aufgrund des mindestens einen Positioniermittels bei bestimmungsgemäßem Gebrauch weder während des Transports zu einer Bearbeitungsstation noch während der Bearbeitung selbst durch das mindestens eine Positioniermittel stattfindet. Dazu kann beispielsweise berücksichtigt werden, dass in sämtlichen Bearbeitungsstationen permanent Kräfte wirken, die der Förderrichtung F entgegengesetzt sind. In diesem Fall wird der Belagträger nämlich innerhalb der Bearbeitungsstationen stets an eine etwaig vorhandene rückseitige Anlagefläche gedrückt. Die erfindungsgemäße Vorrichtung ermöglicht eine besonders reibungsarme Förderung zur Bearbeitung der Bremsbeläge, da die Positioniermittel mit der Auflagefläche mitbewegt werden und somit während der Bearbeitung keine Relativbewegungen zwischen den Belagträgern und/oder dem Bremsbelag einerseits und den Positioniermitteln andererseits stattfinden. Es werden vorzugsweise allenfalls geringe Verschiebewege quer zur Förderrichtung F im Rahmen vorgebbarer Maßtoleranzen zum Ausgleich von Fertigungstoleranzen der Belagträger, beispielsweise deutlich weniger als 1 mm, bevorzugt weniger als 0,5 mm, besonders bevorzugt weniger als 0,1 mm, weiter bevorzugt maximal 0,05 mm und/oder nur einmalige Verschiebung entgegen der Förderrichtung F. Die Bremsbeläge können mit einer erfindungsgemäßen Vorrichtung präzise positioniert und insofern effizient gefördert werden, als auf besonders reibungsarme Fördermethoden zurückgegriffen werden kann, beispielsweise auf eine Gleitlagerung, eine Kugellagerung oder eine Rollenlagerung quer zur Förderrichtung F, insbesondere in Verbindung mit einem verschleißarmen, effizienten Antrieb in Förderrichtung F, wie z.B. einem Riemen- oder Kettenantrieb.

Dadurch, dass die mindestens eine Bearbeitungsstation zumindest teilweise gegen die Förderrichtung F wirkende Bearbeitungskräfte auf die zu bearbeitenden Bremsbeläge ausübt und die Positioniermittel derart gestaltet sind, dass die Lage des Belagträgers auf der Auflagefläche bei Einwirkung der Bearbeitungskräfte aufgrund der Positioniermittel eindeutig vorgegeben ist, können die Positioniermittel besonders einfach als einseitig offene Profile gestaltet werden, die Positionieren der Belagträger auf der Auflagefläche erleichtern.

Wie bereits erwähnt, umfassen die Positioniermittel mindestens eine rückseitige Begrenzungswand, die sich zumindest teilweise quer zur Förderrichtung F und von der Auflagefläche nach oben erstreckt und der Anlage an einer ersten Referenz-Seitenfläche des Belagträgers dient und mindestens zwei seitliche Begrenzungswände, die sich zumindest teilweise in Richtung der Förderrichtung F und von der Auflagefläche nach oben erstrecken und deren Geometrien und Abstand zueinander an zweite Referenz-Seitenflächen des Belagträgers angepasst sind. Solche Begrenzungswände können - insbesondere bei einstückiger Ausbildung an einem Plattenelement - sehr präzise und mit hoher Maßhaltigkeit gefertigt werden, wodurch die Belagträger nahezu spielfrei quer zur Förderrichtung F auf der Auflagefläche positionierbar sind. Es wird darauf hingewiesen, dass anstelle einer Referenz-Seitenfläche eines Belagträgers auch mit Hilfe des Belagträgers eindeutig festgelegte Referenz-Ebenen treten können. Beispielsweise kann eine Referenzebene eines Belagträgers durch zwei Berührungspunkte bzw. sich in Hochrichtung des Belagträgers erstreckende Berührungslinie festgelegt sein. Eine solche Referenz-Ebene kann beispielsweise durch zwei äußere Anlagepunkte an einem Belagträger festgelegt sein, zwischen welchen sich ein konkav geformter Bereich des Belagträgers erstreckt.

In einer weiteren praktischen Ausführungsform einer erfindungsgemäßen Vorrichtung sind die Auflageflächen fest mit separaten Förderbandelementen, insbesondere Förderwagen, oder mit einem Förderband verbunden oder an solchen Elementen ausgebildet. Dies hat den Vorteil, dass die Auflageflächen mit einer sehr hohen Maßhaltigkeit gefertigt werden können, wodurch eine spielfreie oder äußerst spielarme Lagerung der Belagträger und eine hohe Fertigungsgenauigkeit ermöglicht werden. Die Auflageflächen können bei einstückiger Ausbildung an separaten Förderbandelementen oder einem Förderband insbesondere durch Fräsen hergestellt werden.

In einer weiteren praktischen Ausführungsform einer erfindungsgemäßen Vorrichtung bilden die Auflageflächen und zumindest die Bereiche jeweils zwischen zwei benachbarten Auflageflächen (vorzugsweise auch sich seitlich an Auflageflächen anschließende Bereiche) eine geschlossene Oberfläche. In diesem Fall ist ein geschlossener Gurt nach Art eines Förderbandes gebildet, der einem Eindringen von bei der Bearbeitung der Bremsbeläge entstehendem Schmutz in darunter befindliche Elemente entgegenwirkt, insbesondere in Antriebselemente der Fördereinrichtung. Einem Eindringen von Schmutz kann in diesem Zusammenhang insbesondere dadurch zusätzlich entgegengewirkt werden, dass bedarfsweise oder kontinuierlich Luft aus dem Bereich der Antriebselemente innerhalb des geschlossenen Gurtes nach außen gefördert wird (Sperrluft). Unter dem Begriff Förderband werden insbesondere solche Bänder verstanden, die als umlaufende Endlosbänder eingesetzt werden. Diese Ausführungsform kann insbesondere realisiert werden, indem auf einem bandartigen Element (dieses kann auch einstückig ausgebildet sein) Auflageflächen ausgebildet oder angeordnet sind oder indem mehreren Förderbandelemente, insbesondere Förderwagen, zu einem geschlossenen Förderband miteinander gekoppelt sind. Zwischen solchen Förderbandelemente können elastische Elemente angeordnet sein, die so ausgebildet und mit den Förderbandelementen gekoppelt sind, dass der Bereich zwischen zwei Förderbandelementen abgedichtet ist, so dass dem Eindringen von Schmutz in unter den Förderbandelementen angeordnete Elemente entgegengewirkt wird. Vorzugsweise sind solche elastischen Elemente so ausgebildet und angeordnet, dass die Bereiche zwischen zwei Förderbandelementen auch dann zueinander abgedichtet bleiben, wenn das Band umgelenkt wird, insbesondere zwei Mal um 180° um eine senkrechte oder horizontale Achse, so dass eine ringförmige Bandführung mit jeweils zwei Umlenkungen entsteht.

Insbesondere wenn die Auflageflächen fest mit Förderbandelementen oder einem Förderband verbunden sind, ist es bevorzugt, die Auflageflächen an - insbesondere separaten - Plattenelementen auszubilden, die aus den genannten Gründen ebenfalls vorzugsweise einstückig hergestellt werden. Die Plattenelemente können alternativ auch mehrteilig als Montageteile aufgebaut sein. Die Plattenelemente können als individuelle Adapterplatten gestaltet sein, deren Auflagefläche auf einen bestimmten Typ von Belagträgern abgestimmt ist, beispielsweise indem die Auflagefläche komplementär zur Unterseite des Belagträgers ausgebildet ist und/oder indem ein Positionierelement oder mehrere Positionierelemente komplementär zur Referenz-Seitenflächen der Belagträger gestaltet sind. Die Verwendung separater Plattenelemente hat den Vorteil, dass verschiedene Plattenelemente auf den gleichen Förderwagen, sonstigen Förderbandelementen oder Förderbändern verwendet werden, so dass zur Umrüstung nur die Plattenelemente ausgetauscht werden müssen und darüber hinaus keine oder nur geringfügige Veränderungen (z.B. Anpassung der Geschwindigkeit) an Förderwagen, Förderbandelementen oder einem Förderband vorgenommen werden müssen.

Wenn separate Plattenelemente vorgesehen sind, die mit anderen Elementen der Fördereinrichtung verbunden werden müssen, ist es besonders bevorzugt, wenn die Plattenelemente und/oder die anderen Elemente der Fördereinrichtung Kupplungselemente zur Verbindung der Plattenelemente mit anderen Elementen der Fördereinrichtung aufweisen. Dabei kommen als andere Elemente der Fördereinrichtung insbesondere einzelne Förderbandelemente, wie z.B. Förderwagen, oder ein Förderband in Betracht. Besonders bevorzugt sind Schnellkupplungselemente zur Verbindung der Plattenelemente mit anderen Elementen der Fördereinrichtung, die eine sichere und schnelle relative Ausrichtung und Fixierung der Plattenelemente zu den separaten Förderbandelementen oder zu dem Förderband ermöglichen. Als Schnellkupplungselemente werden insbesondere hervorstehende Bolzen mit korrespondierenden Ausnehmungen in Kombination mit Rastmechanismen angesehen. Diesbezüglich wird insbesondere auf - beispielsweise federnd gelagerte - Rastelementen verwiesen, wie z.B. Kugelrasten, die in entsprechene Ausnehmungen eingreifen. Solche Rastmechanismen können eine in Verbindungrichtung betrachtet kraftschlüssige und/oder formschlüssige Verbindung herstellen.

Zur Förderung - und optional ebenfalls als ein Element für eine verdrehsichere Positionierung - der Belagträger sind mindestens eine Auflagefläche, mindestens eine Anschlagfläche und optionale Positionierelemente, mittels welchem die relative Lage des Belagträgers des zu bearbeiteten Bremsbelages zu der Auflagefläche vorgegeben ist, einstückig an einem Förderbandelement, einem Förderband oder einem Plattenelement ausgebildet.

Eine Anschlagfläche ist in einer besonders praktischen Ausführungsform auf der der Förderrichtung F entgegengesetzten Seite (Rückseite) ausgebildet, d.h. die Auflagefläche ist an der Rückseite durch mindestens ein nach oben hervorragendes Anschlagelement begrenzt. Als Anschlagfläche gilt im vorliegenden Fall vorzugsweise ein sich über einen Teilbereich der Breite des zu fördernden Belagträgers erstreckender, gegenüber der Auflagefläche nach oben ragender Vorsprung. Bevorzugt erstreckt sich die Anschlagfläche über mindestens 10 Prozent der Breite des Belagträgers, weiter bevorzugt über mindestens 30 Prozent und besonders bevorzugt über mindestens 50 Prozent. Als Anschlagfläche kann auch ein sich über die vollständige Breite des Belagträgers erstreckender Vorsprung dienen. Dieser kann entweder komplementär zu der anliegenden Seite des Belagträgers oder eben ausgebildet sind.

Eine Anschlagfläche kann auch zur Anlage mit einer beliebigen anderen Seiten eines Belagträgers dienen, wenn aufgrund der auf den Belagträger wirkenden Kräfte und/oder mit Hilfe sonstiger Mittel (beispielsweise mit Hilfe von Spannelementen etc.) sichergestellt ist, dass der Belagträger mit der Anschlagfläche zur Anlage kommt. Als Anschlagfläche können auch ein stiftartiges Element oder mehrere stiftartigen Elemente dienen, wenn die von solchen Elementen auf den Belagträger wirkenden Kräfte zur Förderung des Belagträgers in Förderrichtung F nicht zu einer ungewünschten Abnutzung oder Schädigung des Belagträgers führen, insbesondere wenn während der Bearbeitung des Bremsbelages bearbeitungsbedingt Kräfte entgegen der Förderrichtung F auf den Bremsbelag und den Belagträger wirken und die resultierende Gegenkraft damit im Einzelfall temporär während der Förderung signifikant erhöht ist.

In einer weiteren praktischen Ausführungsform sind die Auflageflächen jeweils an der Rückseite durch mindestens ein nach oben hervorragendes Anschlagelement begrenzt. Ferner ist jeder Auflagefläche mindestens ein Positionierelement zugeordnet, mittels welchem die relative Lage des Belagträgers des zu bearbeiteten Bremsbelages zu der Auflagefläche vorgegeben ist. Damit ist gemeint, dass die Lage des Belagträgers aufgrund des mindestens einen Positionierelements - ggf. in Verbindung mit dem Anschlagelemente und/oder mit weiteren Positionierelementen innerhalb eines engen Toleranzbereichs eindeutig vorgegeben ist. Diesbezüglich wird insbesondere auf Lagetoleranzen (insbesondere hinsichtlich einer etwaigen Verschiebbarkeit quer zur Förderrichtung F) von maximal 0,5 mm, bevorzugt maximal 0,3 mm, weiter bevorzugt maximal 0,1 mm und besonders bevorzugt maximal 0,05 mm verwiesen.

Es wird darauf hingewiesen, dass auch ein Anschlagelement als Positionierelement ausgebildet sein kann, beispielsweise indem das Anschlagelement als ein Vorsprung gegenüber der Auflagefläche ausgebildet ist, dessen Kontur komplementär zu der Kontur der Rückseite eines Belagträgers ausgebildet ist. Insbesondere wenn diese Kontur nicht linear ist, sondern ein oder mehrere Krümmungen oder Richtungsänderungen aufweist, ergibt sich im Einzelfall bereits eine eindeutige Positionierung des Belagträgers auf der Auflagefläche. Dies gilt vor allem für Konturen, die sich über die gesamte Breite des Belagträgers erstrecken und besonders für solche Konturen, die den Belagträger teilweise umklammernd aufnehmen und/oder in horizontaler Richtung formschlüssig aufnehmen. Damit ist gemeint, dass die Positionierelemente so ausgebildet sind, dass der Belagträger nur von oben in die Aufnahmefläche eingesetzt werden kann und - ohne erneutes Anheben - nicht beliebig zerstörungsfrei in horizontaler Richtung verschiebbar ist, d.h. einer horizontalen Bewegung - abgesehen von engen Toleranzmaßen - aufgrund der Positionierelemente durch Formschluss in horizontaler Richtung entgegengewirkt wird.

In einer weiteren praktischen Ausführungsform einer erfindungsgemäßen Vorrichtung sind als Positionierelemente an mindestens einer Auflagefläche eine sich quer zur Förderrichtung F und von der Auflagefläche nach oben erstreckende erste Begrenzungswand und mindestens eine sich in Förderrichtung F und von der Auflagefläche nach oben erstreckende zweite Begrenzungswand zumindest teilweise komplementär zu dem Belagträger des zu bearbeitenden Bremsbelages ausgebildet. Besonders bevorzugt ist es insoweit, wenn eine erste Begrenzungswand mit einer ersten Referenz-Seitenfläche eines Belagträgers korreliert und eine zweite Begrenzungwand mit einer zweiten Referenz-Seitenfläche korreliert. Bei den Referenz-Seitenflächen handelt es sich weiter bevorzugt um solche Flächen, die als Grundlage für die Bemaßung des jeweiligen Belagträgers in Längs- und Querrichtung dienen. In diesem Fall ergibt sich eine besonders präzise Positionierung der Belagträger auf der Auflagefläche, da die Referenz-Seitenflächen keinen Fertigungs-Maßtoleranzen unterliegen.

Es ist vorteilhaft, wenn die Fördereinrichtung (insbesondere unterhalb und/oder seitlich angeordnete) Führungsschienen und in den Führungsschienen gelagerte Förderwagen umfasst. Solche Förderwagen können präzise hergestellt und insbesondere mittels Gleitlagern, Rollenlagern oder Kugellagern reibungsarm in den Führungsschienen bewegt und angetrieben werden. Bevorzugt ist es, wenn die die Förderwagen Mittel umfassen, um deren Breite nachjustieren zu können. Diesbezüglich wird insbesondere auf die Verwendung und Anordnung von Wälzlagerelementen verwiesen, die eine Justierung der Breite der Förderwagen quer zur Förderring F ermöglichen innerhalb eines Toleranzbereichs ermöglichen.

Besonders vorteilhaft ist es, wenn die Förderwagen in Hochrichtung (insbesondere senkrecht zur Förderebene) und/oder in Querrichtung (insbesondere quer zur Förderrichtung) wirkende Lagerelemente umfasst. In diesem Fall kann durch passende Führungsschienen und/oder einstellbare Lagerelemente ein Förderwagen vollständig oder nahezu spielfrei in Hochrichtung und in Querrichtung innerhalb eines Führungsschienensystems positioniert sein. Dies wiederum ermöglicht eine präzise Bearbeitung der Bremsbeläge, da insbesondere bei gleichzeitiger Lagerung in Hochrichtung und in Querrichtung die Nullpunktlage einer Auflagefläche in Bezug auf die Hochrichtung und die Querrichtung für eine Vielzahl von Bearbeitungsstationen exakt festgelegt ist.

Die Fördereinrichtung sowie alle sonstigen Elemente einer erfindungsgemäßen Vorrichtung können ausschließlich aus nicht magnetisierbarem Material hergestellt sein, da magnetische Eigenschaften nicht erforderlich sind. Als Werkstoff geeignet sind insbesondere rostfreie Stahlwerkstoffe (sogenannte VA-Stähle), wie z.B. V2A. Dadurch sind eine Magnetisierung und dadurch verursachte Schmutz- und Staubanhaftungen materialbedingt unmöglich, wodurch die Prozesssicherheit weiter erhöht wird.

Die Erfindung betrifft auch ein Verfahren zur Bearbeitung von auf Belagträgern montierten Bremsbelägen mit mindestens einer Bearbeitungsstation und einer Fördereinrichtung zur umlaufenden Förderung von Auflageflächen in einer zumindest abschnittsweise geradlinigen Förderrichtung F, gemäß welchem
a) ein Belagträger auf einer Auflagefläche angeordnet wird, wobei zusammen mit der Auflagefläche auch Positioniermittel derart umlaufend angeordnet sind, dass die Positioniermittel einer Verdrehung der Belagträger gegenüber der jeweiligen Auflagefläche entgegenwirken, wobei von der mindestens einen Bearbeitungsstation zumindest teilweise gegen die Förderrichtung F wirkende Bearbeitungskräfte auf die zu bearbeitenden Bremsbeläge ausgeübt werden und die Positioniermittel derart gestaltet sind, dass die Lage des Belagträgers auf der Auflagefläche bei Einwirkung der Bearbeitungskräfte aufgrund der Positioniermittel eindeutig vorgegeben ist und wobei die Positioniermittel mindestens eine rückseitige Begrenzungswand umfassen, die sich zumindest teilweise quer zur Förderrichtung F und von der Auflagefläche nach oben erstreckt und der Anlage an einer ersten Referenz-Seitenfläche des Belagträgers dient und mindestens zwei seitliche Begrenzungswände, die sich zumindest teilweise in Richtung der Förderrichtung F und von der Auflagefläche nach oben erstrecken und deren Geometrien und Abstand an zweite Referenz-Seitenflächen des Belagträgers angepasst sind,
b) die Auflagefläche zusammen mit dem Belagträger mittels der Fördereinrichtung durch mindestens eine Bearbeitungsstation gefördert wird und
c) der Belagträger hinter der mindestens einen Bearbeitungsstation in bearbeitetem Zustand von der Auflagefläche abgenommen wird.

Dieses Verfahren ermöglicht - unabhängig von Magnetisierungsvorgängen oder sonstigen Maßnahmen zur Fixierung der Belagträger oder Bremsbeläge zu einem anderen Element - eine sichere, wartungsarme und effiziente Bearbeitung von auf Belagträgern montierten Bremsbelägen. Die Beläge müssen dazu lediglich - manuell oder automatisiert - auf den Auflageflächen positioniert und dann mittels der Fördereinrichtung durch die mindestens eine Bearbeitungsstation gefördert werden. Einer Verschmutzung der Fördereinrichtung kann sowohl durch Verzicht auf eine Magnetisierung sowie durch die bereits erwähnten konstruktiven Maßnahmen an der Vorrichtung wirksam entgegenwirkt werden. Dadurch ergeben sich hohe Standzeiten mit langen Wartungsintervallen und somit ein insgesamt geringer Wartungsaufwand. Ferner können die Bremsbeläge mit hoher Präzision verarbeitet werden.

Von der mindestens einen Bearbeitungsstation werden zumindest teilweise gegen die Förderrichtung F wirkende Bearbeitungskräfte auf die zu bearbeitenden Bremsbeläge ausgeübt, wobei die Positioniermittel derart gestaltet sind, dass die Lage des Belagträgers auf der Auflagefläche - insbesondere nur - bei Einwirkung der Bearbeitungskräfte aufgrund der Positioniermittel eindeutig vorgegeben ist. Bei diesem Verfahren kann die verdrehsichere Positionierung mittels einer einseitig offenen Struktur erfolgen, die das Positionieren der Belagträger auf der Auflagefläche erleichtern und dennoch bedarfsweise eine Verdrehsicherung gewährleisten.

Weitere praktische Ausführungsformen der Erfindung sind nachfolgend im Zusammenhang mit den Zeichnungen beschrieben. Es zeigen:
- Fig. 1: ein Ausführungsbeispiel einer erfindungsgemäßen Vorrichtung in einer Ansicht von vorne,
- Fig. 2: die Vorrichtung aus Figur 1 in einer Ansicht von oben gemäß dem Pfeil II in Figur 1,
- Fig. 3: die Vorrichtung aus Figur 1 in einer Seitenansicht gemäß dem Pfeil III in Figur 1,
- Fig. 4: den in Figur 3 mit Z gekennzeichneten Ausschnitt in einer vergrößerten Darstellung,
- Fig. 5: zwei Transportwagen, jeweils mit einem aufgesetzten Plattenelement mit je einer Aufnahmefläche für eine Fördereinrichtung der in den Figuren 1-4 gezeigten Vorrichtung, wobei auf jeder Aufnahmefläche ein Bremsbelag mit Belagträger positioniert ist,
- Fig. 6: einen der Transportwagen aus Figur 5 ohne aufgesetztes Plattenelement in einer perspektivischen Ansicht,
- Fig. 7: den Transportwagen aus Figur 6 in einer Ansicht von oben,
- Fig. 8: den Transportwagen aus Figur 7 in einer Schnittdarstellung gemäß der Schnittlinie A-A in Figur 7,
- Fig. 9: den Transportwagen aus Figur 9, eingesetzt in seitliche Führungsschienen der Fördereinrichtung einer in den Figuren 1-3 gezeigten Vorrichtung in einer Ansicht gemäß dem Pfeil IX in Figur 7,
- Fig. 10: den Transportwagen aus den Figuren 6-9 in einer Ansicht von vorne gemäß dem Pfeil X in Figur 7,
- Fig. 11: einen Teilbereich des Transportwagens aus den Figuren 6-10,
- Fig. 12: eine Teil-Schnittdarstellung des in Figur 11 mit XII gekennzeichneten Bereichs,
- Fig. 13: eine schematische Darstellung von drei Förderwagen mit Auflageflächen und elastischen Zwischenelementen in einer Ansicht von oben und
- Fig. 14: eine schematische Darstellung der drei Förderwagen aus Figur 13 mit Auflageflächen und elastischen Zwischenelementen in einer Seitenansicht.

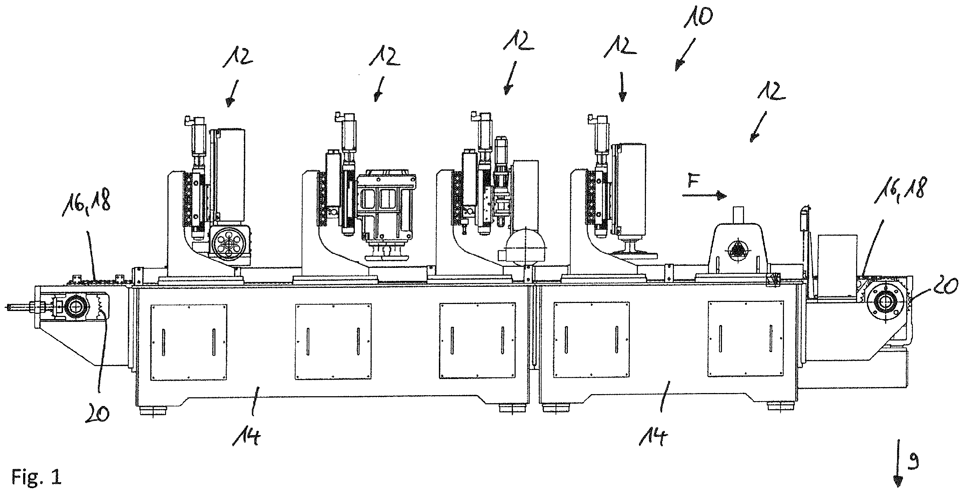

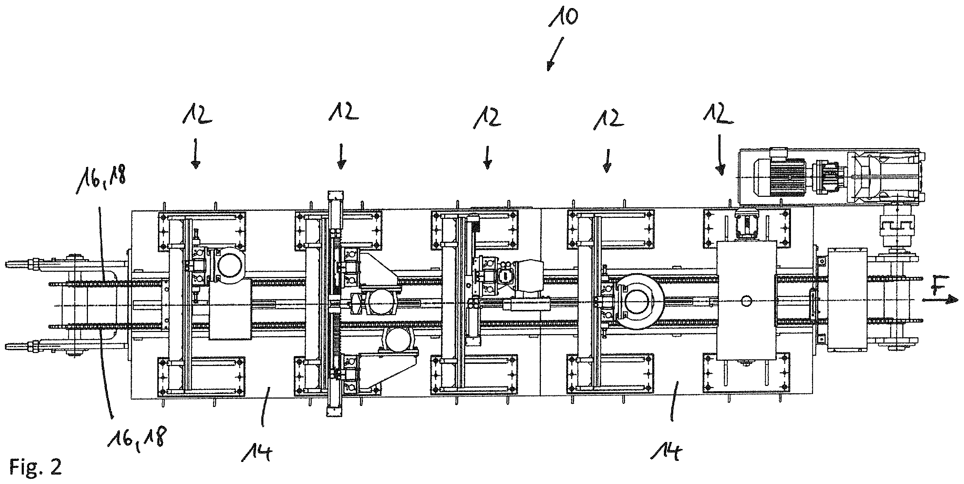

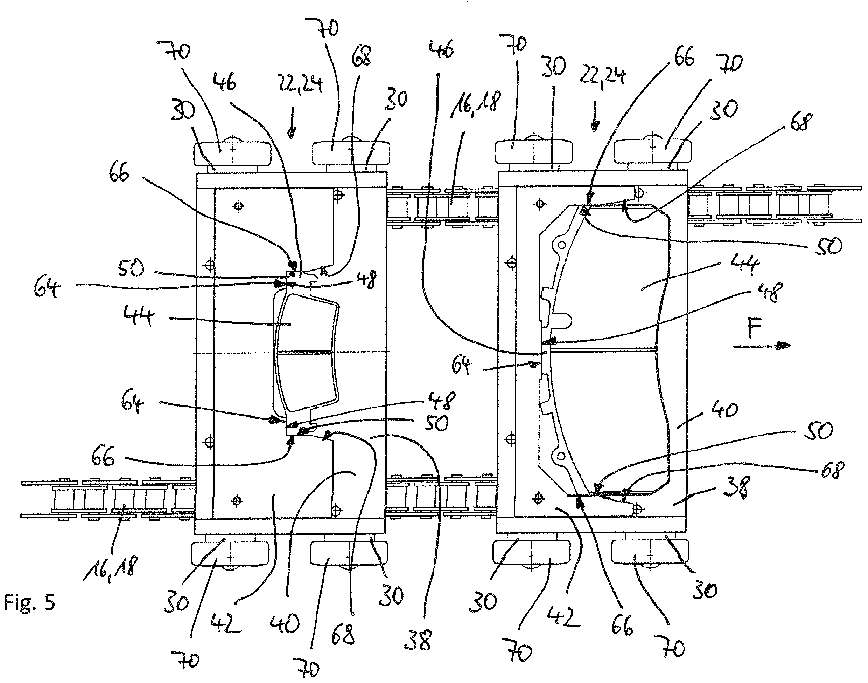

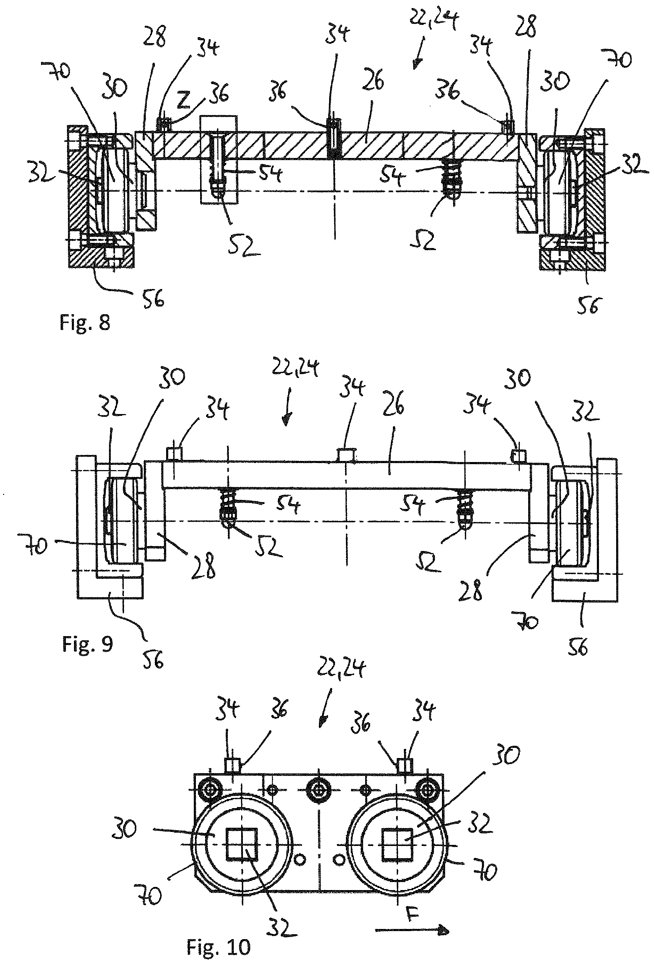

In den Figuren 1-3 ist eine erfindungsgemäße Vorrichtung 10 zur Bearbeitung von auf Belagträgern 46 montierten Bremsbelägen 44 (in den Figuren 1-3 nicht dargestellt, vgl. hierzu insbesondere Figur 5) in verschiedenen Ansichten gezeigt. Wie insbesondere aus den Figuren 1 und 2 ersichtlich ist, umfasst die Vorrichtung 10 mehrere Bearbeitungsstationen 12, die in einer Reihe hintereinander angeordnet sind. Die ersten drei Bearbeitungsstationen 12 sowie die vierte und fünfte Bearbeitungsstation 12 sind jeweils auf einem separaten Bearbeitungstisch 14 angeordnet. Die Tische 14 stehen auf einem nicht dargestellten (vorzugsweise ebenen, horizontal ausgerichteten) Boden auf. Als Teil einer Fördereinrichtung 16 ist in den Figuren 1-3 ein Kettenantrieb mit zwei parallel zueinander verlaufenden, umlaufend angeordneten Ketten 18 zu erkennen, die jeweils über zwei endseitig angeordnete Zahnräder 20 um 180 Grad umgelenkt werden. Mit Hilfe der Fördereinrichtung 16 werden in der gezeigten Ausführungsform als Förderbandelemente 22 dienende Förderwagen 24 in der in den Figuren 1 und 2 gekennzeichneten Förderrichtung F angetrieben und zur Bearbeitung von Bremsbelägen 44 in dieser Richtung durch die Bearbeitungsstationen 12 gefördert. Der Aufbau der Förderwagen 24 geht insbesondere aus den Figuren 5-12 hervor und wird nachfolgend noch im Detail beschrieben.

Bei den Bearbeitungsstationen handelt es sich in der gezeigten Ausführungsform um eine Vorrichtung 10 zum Vorschleifen (1. Station) eine Station zum Seitenschleifen (2. Station), beispielsweise zum Anbringen von Schrägen im Bereich der Seitenkanten der Bremsbeläge 44, eine Station zum Einbringen von Schlitzen (3. Station), eine Station zum Feinschleifen (4. Station) und eine optionale Station für einen kundenspezifischen Sonderschliff (5. Station). Das Ausführungsbeispiel dient lediglich der Veranschaulichung, wobei im vorliegenden Fall ein Tisch 14 mit drei Bearbeitungsstationen und ein Tisch 14 mit zwei Bearbeitungsstationen zu einer einheitlichen Vorrichtung 10 miteinander kombiniert wurden. Es ergibt sich damit ein modularer Aufbau, der es auf einfache Art und Weise ermöglicht, die Zahl der Bearbeitungsstationen zu variieren.

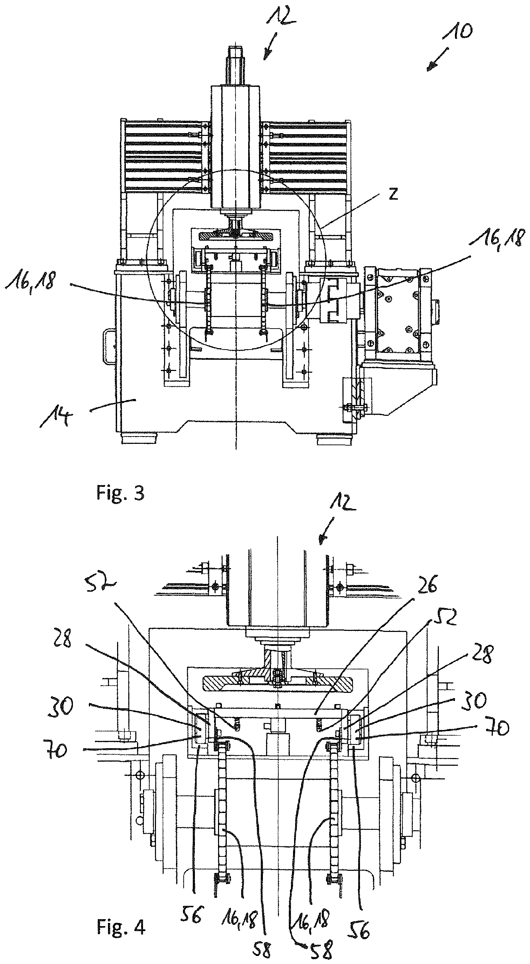

Unter Bezugnahme auf die Figuren 5-12 werden nun zunächst die als Förderbandelemente 22 dienenden Förderwagen 24 im Detail beschrieben. Anschließend wird in Verbindung mit den Figuren 3 und 4 die Kopplung der Förderwagen 24 mit den als Antrieb dienenden Ketten 18 beschrieben.

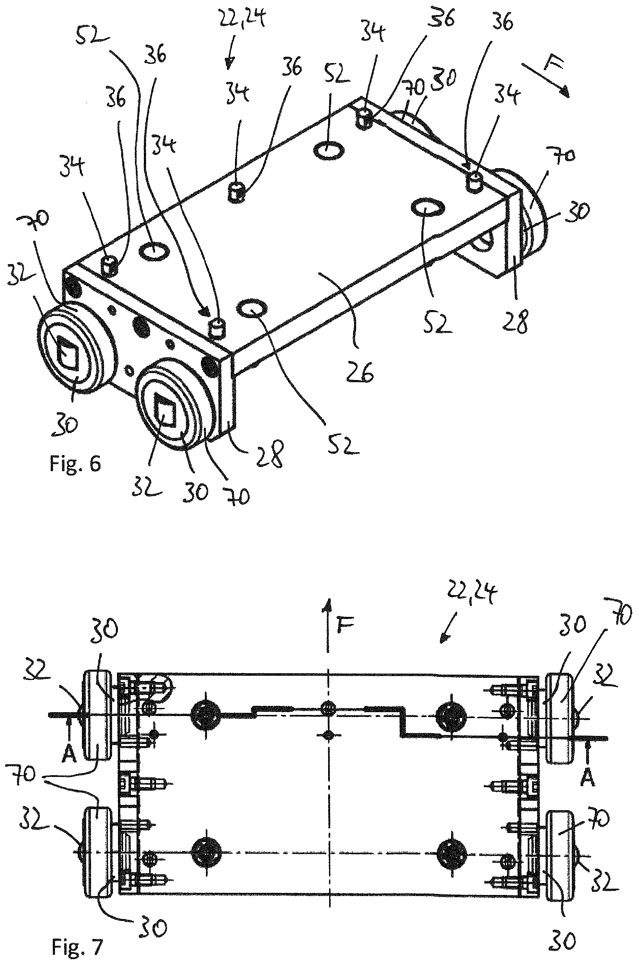

Der Grundaufbau eines Förderwagens 24 lässt sich gut in Figur 6 erkennen. Der Förderwagen 24 ist im Wesentlichen aus folgenden Elementen zusammengesetzt:
- einer sich in horizontaler Richtung erstreckenden Basisplatte 26,
- Seitenplatten 28, die in der gezeigten Ausführungsform mit der Basisplatte 26 fest verschraubt sind und
- an jeder Seitenplatte 28 jeweils zwei Rollenlager 30, die mit den Seitenplatten 28 verschraubt sind.

Die Rollenlager 30 mit den in den Figuren 5-10 erkennbaren, seitlich hervorragenden Rollenelementen 32 zur Aufnahme von quer zur Förderrichtung F wirkenden Kräften und vertikal ausgerichteten Rollen 70 umfassen eine nicht im Detail dargestellte Verstellmöglichkeit zur Variation des Abstandes der seitlichen Rollenelemente 32 zu der Seitenplatte 28, an welcher das jeweilige Rollenlager 30 befestigt ist. Dies erfolgt vorzugsweise über ein Einstellelement, wie beispielsweise eine Einstellschraube, welches mit einer exzentrischen Lagerung gekoppelt ist. Dadurch kann der Abstand der Rollenelemente 32 an damit zusammenwirkende seitliche Führungselemente angepasst und einer Bewegung bei Einwirkung von quer zur Förderrichtung wirkenden (Quer-)Kräften entgegenwirkt bzw. das Spiel der Förderwagen quer zur Förderrichtung minimiert werden.

Wie insbesondere in Figur 6 erkennbar ist, sind an der Basisplatte 26 in der gezeigten Ausführungsform fünf gegenüber der Plattenoberfläche nach oben hervorstehende Bolzen 34 angeordnet. Die Bolzen weisen an jeweils einer Seite eine Abflachung auf, die sich in axialer Richtung des jeweiligen Bolzens erstreckt. Im Bereich der Abflachungen sind gegenüber den Abflachungen hervorstehende Kugelrasten 36 angeordnet. Dabei handelt es sich um federnd gelagerte Kugelelemente, die gegen die Federkraft in Richtung der Abflachung nach innen gedrückt werden können. Die Bolzen 34 dienen der Lagepositionierung zu einem auf die Basisplatte 26 aufzusetzenden Plattenelement 38, das wie in Figur 5 erkennbar gestaltet sein kann. Darüber hinaus dienen die Kugelrasten 36 als Schnellkupplungselemente zur Herstellung einer festen Verbindung zwischen einem Plattenelement 38 und einer Basisplatte 26.

Die in Figur 5 gezeigten Plattenelemente 38 besteht in den gezeigten Ausführungsformen (linke und rechte Ausführungsform) jeweils aus einer unteren Platte 40 und einer oberen Platte 42, die fest miteinander verbunden sind. Die erste Platte 40 und die zweite Platte 42 sind miteinander verschraubt oder auf andere geeignete Art und Weise fest miteinander verbunden. Das Plattenelement 38 kann alternativ auch einstückig hergestellt werden, insbesondere indem aus einer Platte mit der Dicke der ersten Platte 40 und der zweiten Platte 42 die gewünschte Kontur durch Ausfräsen erzeugt wird.

Das Plattenelement 38 umfasst eine Auflagefläche für den Belagträger 46, der in Figur 5 durch die dargestellten Bremsbeläge 44 mit Belagträger 46 verdeckt ist. Unter Auflagefläche wird die Fläche verstanden, auf welcher der Belagträger 46 mit seiner Unterseite aufliegt.

Wie aus Figur 5 ersichtlich, ist die zweite Platte 42 des Plattenelements 38 teilweise an die Kontur des jeweiligen Belagträgers 46 angepasst.

Bei dem in Figur 5 links dargestellten Förderwagen 24 sind an dem Plattenelement 38 zwei rückseitige Begrenzungswände 48 vorgesehen, die sich quer zur Förderrichtung F (hier: senkrecht zur Förderrichtung F) und von der Auflagefläche aus nach oben erstrecken und an korrespondierende rückseitige Referenz-Seitenflächen 64 des Belagträgers 46 angepasst sind. Ferner sind zwei seitliche Begrenzungswände 50 vorgesehen, die sich in der gezeigten Ausführungsform in Förderrichtung F und von der Auflagefläche aus nach oben erstrecken und an korrespondierende seitliche Referenz-Seitenflächen 66 des Belagträgers 46 angepasst sind.

Bei dem in Figur 5 rechts dargestellten Förderwagen 24 ist nur eine rückseitige Begrenzungswand 48 vorgesehen, die an eine rückseitige Referenz-Seitenfläche 64 des Belagträgers 46 angepasst ist. Sowohl bei dem rechten Förderwagen 24 als auch bei dem linken Förderwagen 24 ist durch die Begrenzungswände 48, 50 eine einseitig offene Struktur gebildet, die es ermöglicht, Belagträger von der Vorderseite her, in diese Struktur einzuschieben. Um das Einschieben zu erleichtern, sind Einführschrägen 68 an der oberen Platte 42 ausgebildet.

Die in Figur 5 nicht erkennbaren Auflageflächen, welche sich unterhalb der Belagträger 46 befinden, sind in der gezeigten Ausführungsform eben ausgebildet. Auch die Belagträger 46 weisen eine eben ausgebildete Rückseite auf, mit welcher sie auf den Auflageflächen anliegen.

In den in Figur 5 gezeigten Ausführungsformen sind die Auflageflächen der Plattenelemente 38 an die Unterseite der Belagträger 46 angepasst. Der auf dem linken Förderwagen 24 angeordnete Belagträger 46 weist eine eben ausgebildete Unterseite auf, der auf dem rechten Förderwagen 24 angeordnete Belagträger weist eine gekrümmte Unterseite auf. Dadurch sind durch die komplementäre Ausbildung der Auflageflächen die Belagträger 46 nicht nur um die Vertikale verdrehsicher, sondern auch kippsicher auf den Auflageflächen positioniert.

Die in Figur 5 von oben dargestellten Plattenelemente 38 weisen auf ihrer Unterseite fünf nicht dargestellte Öffnungen auf, die insoweit an die in Figur 6 gezeigten fünf Bolzen 34 der Basisplatte 26 angepasst sind, dass die Bolzen 34 durch die Öffnungen geführt werden und in diese eintauchen können. Zum Verbinden eines Plattenelements 38 mit der Basisplatte 26 wird die Basisplatte 26 so positioniert, dass die Bolzen 34 in die in dem Plattenelement 38 ausgebildeten Öffnungen eindringen können. Dann wird das Plattenelement 38 mit einer ausreichend großen Kraft nach unten gepresst, um die Kugelrasten 36 einfedern und nach Erreichen einer Soll-Lage wieder ausfedern zu lassen. Das Plattenelement 38 ist mit der Basisplatte 26 in der gezeigten Ausführungsform sicher verbunden, wenn die die Bolzen in die Öffnungen eingetaucht die Kugelrasten 26 wieder ausgefedert sind. Dazu können in den Öffnungen des Plattenelements 38 beispielsweise entsprechende Freiräume in Form von Bohrungen vorgesehen sein oder das Plattenelement 38 ist so gestaltet, dass die Bolzen mit den Kugelrasten 26 eine Platte des Plattenelements 38 vollständig durchdringen und die Kugelrasten 26 oberhalb dieser Platte wieder ausfedern.

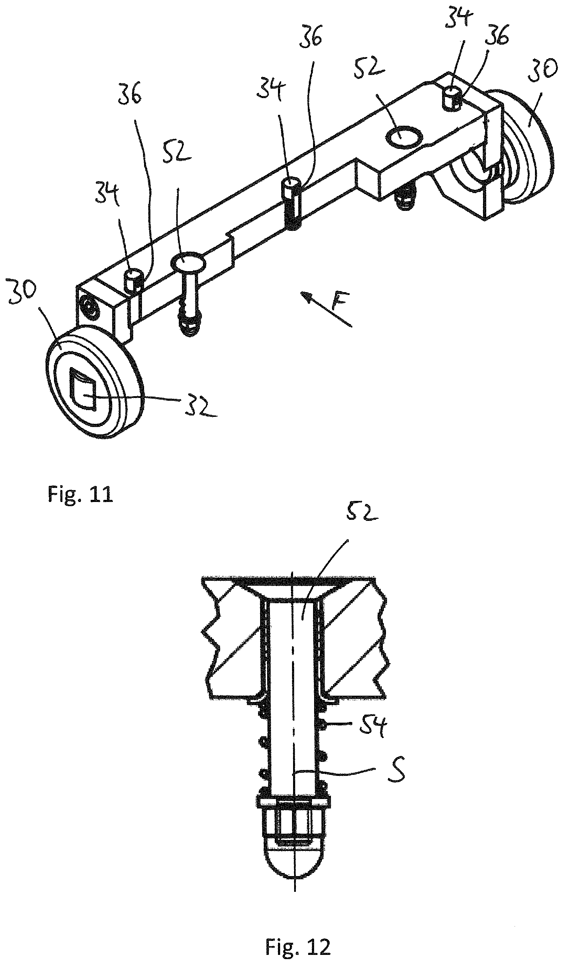

In der gezeigten Ausführungsform kommt das Plattenelement 38 im mit der Basisplatte 26 verbundenen Zustand mit der Oberseite der Basisplatte 26 zur Anlage. In dieser Position federn die Kugelrasten 36 innerhalb des Plattenelements 38 in innerhalb der Öffnungen der ersten Platte 26 vorgesehenen Freiräumen (nicht dargestellt) wieder aus, so dass das Plattenelement 38 durch die ausgefederten Kugelrasten 36 gegenüber der Basisplatte 26 sicher gehalten wird. Um das Lösen eines Plattenelements 38 zu erleichtern, sind an der Basisplatte 26 in der gezeigten Ausführungsform vier Stößel 52 angeordnet. Diese Stößel 52 können entlang der in Figur 12 dargestellten Stößelachse S nach oben verfahren werden, um eine mit Hilfe der Kugelrasten 36 hergestellte Verbindung eines Plattenelements 38 mit einer Basisplatte 26 wieder zu lösen. Dazu kann ein geeignetes Antriebselement vorgesehen sein, beispielsweise ein pneumatischer Antrieb, ein elektrischer Antrieb oder ein Antrieb mittels eines Nockens.

Wie insbesondere in Figur 12 zu erkennen ist, ist an dem Stößel 52 auch ein Federelement 54 derart angeordnet, dass das Stößelelement in der in Figur 6 gezeigten Vorzugsstellung hält, wenn es nicht angetrieben ist.

Wie insbesondere in den Figuren 3, 4, 8 und 9 erkennbar ist, ist der Förderwagen 24 in der gezeigten Ausführungsform einer erfindungsgemäßen Vorrichtung 10 im Bereich der Rollenlager 30 in C-förmig ausgebildeten seitlichen Führungsschienen 56 gelagert. Die Rollen 70 stehen schwerkraftbeding auf den unteren Flächen der Führungsschienen 56 auf (sie werden innerhalb der Bearbeitungsstationen 12 insbesondere bei schleifender Bearbeitung von der Oberseite aus zusätzlich nach unten gedrückt) und rollen mit ihren Rollen 70 auf diesen ab. Dies hat den Vorteil, dass die Nullpunktlage aller Förderwagen 24 in Hochrichtung und in Querrichtung an allen Bearbeitungsstationen 12 eindeutig festgelegt ist. Denn zum einen ist der Abstand der Auflageflächen zu der Aufstandsfläche der Rollen 70 auf den Führungsschienen 56 in Hochrichtung eindeutig definiert und bleibt konstant. Und zum anderen ist die Ausrichtung der Auflageflächen zu den Führungsschienen 56 in Querrichtung passgenau festlegbar, insbesondere mittels einstellbarer Rollenelemente 32.

In Figur 4 ist auch zu erkennen, dass die Ketten 18 über Verbindungsglieder 58 fest mit den Seitenplatten 28 verschraubt sind. In Richtung der Schwerkraft g wirkende Kräfte sowie quer zur Förderrichtung wirkende Kräfte auf die Bremsbeläge und/oder Belagträger, insbesondere im Bereich der Bearbeitungsstationen 12, werden von den seitlichen Führungsschienen 56 über die Rollen 70 (vertikale Kräfte) und die Rollenelemente 32 (Querkräfte) bei gleichzeitiger Bewegung der Führungswagen 24 reibungsarm aufgenommen.

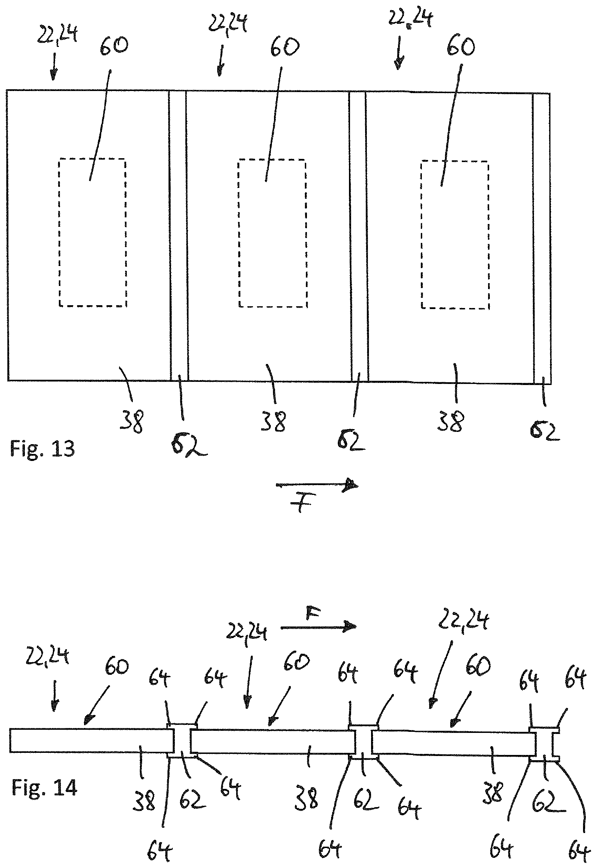

Die Figuren 13 und 14 zeigen in schematischen Darstellungen drei Plattenelemente 38 mit ebenfalls nur schematisch dargestellten Auflageflächen 60, die wechselweise mit elastischen Zwischenelementen 62 angeordnet sind, wobei Figur 13 eine Ansicht von oben und Figur 14 eine Seitenansicht ist. Die Darstellungen sind exemplarisch. Es ist erkennbar, dass die Auflageflächen 60 und die Bereiche zwischen zwei benachbarten Auflagenflächen (hier: bestehend aus den Plattenelementen 38 und den elastischen Zwischenelementen 62) in Förderrichtung F betrachtet eine geschlossene Oberfläche nach Art eines umlaufenden Gurtes bilden können, von welchem in Figur 13 nur jeweils drei Elemente des Gurtes dargestellt sind.

In Figur 14 sind Höhenunterschiede und Konturen der Plattenelemente 38 nicht dargestellt. Diese Figur dient vor allem der Veranschaulichung der Gestaltung der elastischen Zwischenelemente 62, welche lippenartige Vorsprünge 64 aufweisen, die die Plattenelemente 38 in den Randbereichen überdecken. Diese lippenartigen Elemente 64 sind gut geeignet, um auch im Bereich von in den Figuren 13 und 14 nicht erkennbaren Umlenkungen eines umlaufenden Gurtes eine wirksame Abdichtung zwischen zwei benachbarten Plattenelementen 38 zu bewirken.

Die in der vorliegenden Beschreibung, in den Zeichnungen sowie in den Ansprüchen offenbarten Merkmale der Erfindung können sowohl einzeln als auch in Kombinationen für die Verwirklichung der Erfindung in ihren verschiedenen Ausführungsformen wesentlich sein, sofern der Schutzbereich, wie er durch die Ansprüche definiert wird, nicht verlassen wird. Insbesondere wird auf folgende alternativ oder kumulativ realisierbare Möglichkeiten verwiesen, eine erfindungsgemäße Vorrichtung bestimmt durch den Schutzbereich, wie er durch die Ansprüche definiert wird, zu gestalten:
1. Als ein Positioniermittel im Sinne der Erfindung kann ein einzelner, von der Auflagefläche nach oben hervorstehender Vorsprung dienen, der bei einem auf der Auflagefläche aufliegenden Belagträger in eine in dem Belagträger komplementär ausgebildete Öffnung eingreift. Ein solcher Vorsprung kann beispielsweise eine sechseckige Form aufweisen, um als Verdrehsicherung zu dienen.
2. Als ein Positioniermittel im Sinne der Erfindung kann/können eine die Auflagefläche vollständig oder teilweise umgebende Begrenzungswand oder Begrenzungswände vorgesehen sein, die sich von seitlichen Rändern der der Auflagefläche nach oben erstrecken und komplementär zu den Seitenflächen des aufzunehmenden Belagträgers ausgebildet sind. Diese Begrenzungswände können derart gestaltet sein, dass der Belagträger nach dem Positionieren auf der Auflagefläche ausschließlich durch die Begrenzungswände vollständig gegen Verdrehen um eine sich senkrecht zur Förderebene erstreckende Achse (insbesondere eine vertikale Achse) gesichert ist.
3. Separate Plattenelemente, insbesondere Adapterplatten, können gegenüber Basisplatten oder sonstigen Elementen von Förderbandelementen (z.B. Förderwagen), die zur Verbindung der Plattenelemente dienen, in Förderrichtung F und in die der Förderrichtung F entgegengesetzte Richtung einen Überstand aufweisen. Dies erleichtert es, mit den Plattenelementen und etwaigen Zwischenelementen eine geschlossene Oberfläche auszubilden.
4. Die in den Ausführungsbeispielen rechteckigen Plattenelemente können auch andere Geometrien aufweisen.
5. Die Höhe der Begrenzungswände entspricht maximal der Summe der Höhe des Belagträgers und des Bremsbelages, bevorzugt maximal der Höhe des Belagträgers, besonders bevorzugt maximal 80 Prozent der Höhe des Belagträgers.
6. Um einer Verdrehung der Belagträger auf den Auflageflächen entgegenzuwirken können als Positionierelemente mindestens eine rückseitige Begrenzungswand und zwei seitliche Begrenzungswände u-förmig zueinander als einseitig offene Struktur angeordnet sein. Die Begrenzungswände können miteinander verbunden oder voneinander separiert sein. In Förderrichtung betrachtet vor den seitlichen Begrenzungswänden können sich gegenüber dem zu haltenden Belagträger quer zur Förderrichtung entfernende Einführschrägen ausgebildet sein.
7. Ein Förderband oder einzelne Förderbandelemente, insbesondere Förderwagen, sind in vertikaler Richtung und quer zur Förderrichtung über ein gemeinsames Lagerelement oder mehrere Lagerelemente gelagert. Dazu sind insbesondere Rollenlager einer um einen feststehenden Grundkörper drehbar gelagerten Rolle und einem in dem Grundkörper gelagerten, seitlich hervorstehenden weiteren Lagerelement, insbesondere Rollenelement, geeignet.
8. Mit Hilfe von Sperrluft, die aus einem Innenbereich, der von den umlaufenden Auflageflächen umschlossen ist, wird bedarfsweise oder kontinuierlich einem Eindringen von Schmutz in diesen Innenbereich entgegengewirkt. Mit einer solchen Maßnahme kann einer Verschmutzung von in dem Innenbereich angeordneten Antriebselementen effizient entgegenwirkt werden.
9. Lagerelemente für Förderwagen, insbesondere Rollen 70, sind vorzugsweise in Hochrichtung passgenau auf die Höhe von Führungsschienen 56 abgestimmt bzw. eingestellt, wobei Einstellmöglichkeiten sowohl seitens der Führungsschienen 56 als auch seitens der Rollen 70 vorgesehen sein können. Mit passgenau sind insbesondere Abweichungen von deutlich weniger als 1 mm, bevorzugt weniger als 0,5 mm, besonders bevorzugt weniger als 0,1 mm und weiter bevorzugt maximal 0,05 mm gemeint.

### Bezugszeichenliste

- 10: Vorrichtung
- 12: Bearbeitungsstation
- 14: Tisch
- 16: Fördereinrichtung
- 18: Kette
- 20: Zahnrad
- 22: Förderbandelement
- 24: Förderwagen
- 26: Basisplatte
- 28: Seitenplatte
- 30: Rollenlager
- 32: Rollenelement
- 34: Bolzen
- 36: Kugelraste
- 38: Plattenelement
- 40: erste Platte
- 42: zweite Platte
- 44: Bremsbelag
- 46: Belagträger
- 48: rückseitige Begrenzungswand
- 50: seitliche Begrenzungswand
- 52: Stößel
- 54: Federelement
- 56: Führungsschiene
- 58: Verbindungsglied
- 60: Auflagefläche
- 62: Zwischenelement
- 64: rückseitige Referenz-Seitenfläche
- 66: seitliche Referenz-Seitenfläche
- 68: Einführschräge
- 70: Rolle

## Patentansprüche

1. Vorrichtung zur Bearbeitung von auf Belagträgern (46) montierten Bremsbelägen (44) mit mindestens einer Bearbeitungsstation (12) sowie einer Fördereinrichtung (16) zur kontinuierlichen und automatisierten Bewegung zu bearbeitender Bremsbeläge (44) in einer zumindest abschnittsweise geradlinigen Förderrichtung F, wobei
die Fördereinrichtung (16) mehrere, von der Fördereinrichtung (16) umlaufend angetriebene Auflageflächen (60) zur Anordnung von Belagträgern (46) der zu bearbeitenden Bremsbeläge (44) umfasst und ferner mit den Auflageflächen (60) umlaufende Positioniermittel, die einer Verdrehung der Belagträger (46) gegenüber der jeweiligen Auflagefläche (60) entgegenwirken,
**dadurch gekennzeichnet,**
**dass** die mindestens eine Bearbeitungsstation (12) zumindest teilweise gegen die Förderrichtung F wirkende Bearbeitungskräfte auf die zu bearbeitenden Bremsbeläge (44) ausübt und die Positioniermittel derart gestaltet sind, dass die Lage des Belagträgers (46) auf der Auflagefläche (60) bei Einwirkung der Bearbeitungskräfte aufgrund der Positioniermittel eindeutig vorgegeben ist und dass die Positioniermittel mindestens eine rückseitige Begrenzungswand (48) umfassen, die sich zumindest teilweise quer zur Förderrichtung F und von der Auflagefläche (60) nach oben erstreckt und der Anlage an einer ersten Referenz-Seitenfläche (64) des Belagträgers dient und mindestens zwei seitliche Begrenzungswände (50), die sich zumindest teilweise in Richtung der Förderrichtung F und von der Auflagefläche (60) nach oben erstrecken und deren Geometrien und Abstand an zweite Referenz-Seitenflächen (66) des Belagträgers angepasst sind.

2. Vorrichtung nach dem vorstehenden Anspruch, **dadurch gekennzeichnet, dass** die Auflageflächen (60) und die Positioniermittel fest mit einzelnen Förderbandelementen (22) oder einem Förderband verbunden oder an solchen Elementen ausgebildet sind.

3. Vorrichtung nach einem oder mehreren der vorstehenden Ansprüche, **dadurch gekennzeichnet, dass** die Auflageflächen (60) und zumindest die Bereiche jeweils zwischen zwei benachbarten Auflageflächen (60) eine geschlossene Oberfläche bilden und/oder dass die Auflageflächen (60) an Plattenelementen (38) ausgebildet sind.

4. Vorrichtung nach dem vorstehenden Anspruch, **dadurch gekennzeichnet, dass** die Plattenelemente (38) und/oder andere Elemente der Fördereinrichtung Kupplungselemente zur Verbindung der Plattenelemente (38) mit anderen Elementen der Fördereinrichtung aufweisen.

5. Vorrichtung nach einem oder mehreren der vorstehenden Ansprüche, **dadurch gekennzeichnet, dass** die Auflagefläche (60), ein Anschlagelement und/oder mindestens ein als Positioniermittel dienendes Positionierelement, mittels welchem die relative Lage des Belagträgers (46) des zu bearbeiteten Bremsbelages (44) zu der Auflagefläche (60) vorgegeben ist, einstückig an einem Förderbandelement (22), einem Förderband oder einem Plattenelement (38) ausgebildet sind.

6. Vorrichtung nach einem oder mehreren der vorstehenden Ansprüche, **dadurch gekennzeichnet, dass** die Auflageflächen (60) jeweils an der Rückseite durch mindestens ein nach oben hervorragendes Anschlagelement begrenzt sind und wobei jeder Auflagefläche (60) mindestens ein Positionierelement zugeordnet ist, mittels welchem die relative Lage des Belagträgers (46) des zu bearbeiteten Bremsbelages (44) zu der Auflagefläche (60) vorgegeben ist.

7. Vorrichtung nach dem vorstehenden Anspruch, **dadurch gekennzeichnet, dass** mindestens ein Anschlagelement als Positionierelement ausgebildet ist.

8. Vorrichtung nach dem vorstehenden Anspruch, **dadurch gekennzeichnet, dass** als Positionierelemente eine sich quer zur Förderrichtung F und von der Auflagefläche (60) nach oben erstreckende erste Begrenzungswand der Auflagefläche (60) und mindestens eine sich in Förderrichtung F und von der Auflagefläche (60) nach oben erstreckende zweite Begrenzungswand mindestens einer Auflagefläche (60) zumindest teilweise komplementär zu dem Belagträger (46) des zu bearbeitenden Bremsbelages (44) ausgebildet sind.

9. Vorrichtung nach einem oder mehreren der vorstehenden Ansprüche, **dadurch gekennzeichnet, dass** die Fördereinrichtung (16) Führungsschienen (56) und in den Führungsschienen (56) gelagerte Förderwagen (24) umfasst.

10. Vorrichtung nach dem vorstehenden Anspruch, **dadurch gekennzeichnet, dass** die Förderwagen (24) in Hochrichtung und/oder in Querrichtung wirkende Lagerelemente umfasst.

11. Vorrichtung nach einem oder mehreren der vorstehenden Ansprüche, **dadurch gekennzeichnet, dass** die Fördereinrichtung (16) aus nicht magnetisierbarem Material hergestellt ist.

12. Verfahren zur Bearbeitung von auf Belagträgern (46) montierten Bremsbelägen (44) mit mindestens einer Bearbeitungsstation (12) und einer Fördereinrichtung (16) zur umlaufenden Förderung von Auflageflächen (60) in einer zumindest abschnittsweise geradlinigen Förderrichtung F, gemäß welchem
a) ein Belagträger (46) auf einer Auflagefläche (60) angeordnet wird, wobei zusammen mit der Auflagefläche (60) auch Positioniermittel derart umlaufend angeordnet sind, dass die Positioniermittel einer Verdrehung der Belagträger (46) gegenüber der jeweiligen Auflagefläche (60) entgegenwirken, wobei von der mindestens einen Bearbeitungsstation (12) zumindest teilweise gegen die Förderrichtung F wirkende Bearbeitungskräfte auf die zu bearbeitenden Bremsbeläge (44) ausgeübt werden und die Positioniermittel derart gestaltet sind, dass die Lage des Belagträgers (46) auf der Auflagefläche (60) bei Einwirkung der Bearbeitungskräfte aufgrund der Positioniermittel eindeutig vorgegeben ist und wobei die Positioniermittel mindestens eine rückseitige Begrenzungswand (48) umfassen, die sich zumindest teilweise quer zur Förderrichtung F und von der Auflagefläche (60) nach oben erstreckt und der Anlage an einer ersten Referenz-Seitenfläche (64) des Belagträgers dient und mindestens zwei seitliche Begrenzungswände (50), die sich zumindest teilweise in Richtung der Förderrichtung F und von der Auflagefläche (60) nach oben erstrecken und deren Geometrien und Abstand an zweite Referenz-Seitenflächen (66) des Belagträgers angepasst sind,
b) die Auflagefläche (60) zusammen mit dem Belagträger (46) mittels der Fördereinrichtung (16) durch mindestens eine Bearbeitungsstation (12) gefördert wird und
c) der Belagträger (46) hinter der mindestens einen Bearbeitungsstation (12) in bearbeitetem Zustand von der Auflagefläche (60) abgenommen wird.

## Claims

1. Device for processing brake pads (44) fitted on pad holders (46) with at least one processing station (12) as well as a conveying device (16) for continuous and automatic movement of brake pads (44) to be processed in an at least partially linear conveying direction F, wherein
the conveying device (16) comprises several bearing faces (60) driven in a revolving manner by the conveying device (16) for arrangement of pad holders (46) of the brake pads (44) to be processed and moreover positioning means which revolve with the bearing faces (60) and which counteract a rotation of the pad holders (46) with respect to the respective bearing face (60),
**characterised in that**
the at least one processing station (12) exerts processing forces acting at least partially counter to conveying direction F on the brake pads (44) to be processed and the positioning means are configured such that the position of the pad holder (46) is explicitly specified on the bearing face (60) during action of the processing forces as a result of the positioning means and that the positioning means comprise at least one rear-side delimiting wall (48) which extends at least partially transversely to conveying direction F and upwards from the bearing face (60) and serves to bear on a first reference side face (64) of the pad holder and at least two lateral delimiting walls (50) which extend at least partially in the direction of conveying direction F and upwards from the bearing face (60) and the geometries and spacing of which are adapted to second reference side faces (66) of the pad holder.

2. Device according to the preceding claim, **characterised in that** the bearing faces (60) and the positioning means are connected fixedly to individual conveyor belt elements (22) or a conveyor belt or are formed on such elements.

3. Device according to one or more of the preceding claims, **characterised in that** the bearing faces (60) and at least the regions in each case between two adjacent bearing faces (60) form a closed surface and/or that the bearing faces (60) are formed on plate elements (38).

4. Device according to the preceding claim, **characterised in that** the plate elements (38) and/or other elements of the conveying device have coupling elements for connection of the plate elements (38) to other elements of the conveying device.

5. Device according to one or more of the preceding claims, **characterised in that** the bearing face (60), a stop element and/or at least one positioning element which serves as a positioning means, by means of which the relative position of the pad holder (46) of the brake pad (44) to be processed with respect to the bearing face (60) is specified, are formed in one piece on a conveyor belt element (22), a conveyor belt or a plate element (38).

6. Device according to one or more of the preceding claims, **characterised in that** the bearing faces (60) are delimited in each case on the rear side by at least one upwardly projecting stop element and wherein each bearing face (60) is assigned at least one positioning element by means of which the relative position of the pad holder (46) of the brake pad (44) to be processed with respect to the bearing face (60) is specified.

7. Device according to the preceding claim, **characterised in that** at least one stop element is formed as the positioning element.

8. Device according to the preceding claim, **characterised in that** a first delimiting wall, which extends transversely to conveying direction F and upwards from the bearing face (60), of the bearing face (60) and at least one second delimiting wall, which extends in conveying direction F and upwards from bearing face (60), of at least one bearing face (60) are formed as positioning elements at least partially in a complementary manner to the pad holder (46) of the brake pad (44) to be processed.

9. Device according to one or more of the preceding claims, **characterised in that** the conveying device (16) comprises guide rails (56) and trolleys (24) mounted in the guide rails (56).

10. Device according to the preceding claim, **characterised in that** the trolleys (24) comprise bearing elements acting in the vertical direction and/or in the transverse direction.

11. Device according to one or more of the preceding claims, **characterised in that** the conveying device (16) is produced from non-magnetisable material.

12. Method of processing brake pads (44) fitted on pad holders (46) with at least one processing station (12) and a conveying device (16) for revolving conveying of bearing faces (60) in an at least partially linear conveying direction F, according to which
a) a pad holder (46) is arranged on a bearing face (60), wherein, together with the bearing face (60), positioning means are also arranged in a revolving manner such that the positioning means counteract a rotation of the pad holders (46) with respect to the respective bearing face (60), wherein processing forces acting from the at least one processing station (12) at least partially counter to conveying direction F on brake pads (44) to be processed are exerted and the positioning means are configured such that the position of the pad holder (46) on the bearing face (60) in the case of action of the processing forces as a result of the positioning means is explicitly specified and wherein the positioning means comprise at least one rear-side delimiting wall (48) which extends at least partially transversely to conveying direction F and upwards from the bearing face (60) and serves to bear on a first reference side face (64) of the pad holder and at least two lateral delimiting walls (50) which extend at least partially in the direction of conveying direction F and upwards from the bearing face (60) and the geometries and spacing of which are adapted to second reference side faces (66) of the pad holder,
b) the bearing face (60) is conveyed together with the pad holder (46) by means of the conveying device (16) through at least one processing station (12) and
c) the pad holder (46) behind the at least one processing station (12) in the processed state is removed from the bearing face (60).

## Revendications

1. Dispositif d'usinage de garnitures de frein (44) montées sur des supports de garniture (46) comprenant au moins un poste d'usinage (12) et un convoyeur (16) permettant le déplacement continu et automatisé des garnitures de frein (44) à usiner dans une direction de transport F rectiligne au moins par tronçons, dans lequel
le convoyeur (16) comprend plusieurs surfaces d'appui (60) entraînées en circulation par le convoyeur (16) pour y disposer des supports de garniture (46) des garnitures de frein (44) à usiner et des moyens de positionnement circulant avec les surfaces d'appui (60) qui s'opposent à une torsion du support de garniture (46) par rapport à la surface d'appui (60) respective, **caractérisé en ce que**
le moins un poste d'usinage (12) exerce des forces d'usinage sur les garnitures de frein (44) à usiner, qui agissent au moins en partie contre la direction de transport F et les moyens de positionnement sont configurés de telle sorte que la position du support de garniture (46) sur la surface d'appui (60) est clairement définie, sous l'action des forces d'usinage, grâce aux moyens de positionnement et que les moyens de positionnement comprennent au moins une paroi de délimitation (48) arrière, qui s'étend au moins en partie transversalement à la direction de transport F et de la surface d'appui (60) vers le haut et sert d'appui contre une première surface latérale de référence (64) du support de garniture, et au moins deux parois de délimitation latérales (50) qui s'étendent au moins en partie dans la direction de transport F et depuis la surface d'appui (60 vers le haut, dont la géométrie et l'écartement sont adaptés à des secondes surfaces latérales de référence (66) du support de garniture.

2. Dispositif selon la revendication précédente, **caractérisé en ce que** les surfaces d'appui (60) et les moyens de positionnement sont assemblés solidement avec des éléments individuels de bande transporteuse (22) ou une bande transporteuse ou sont formés sur de tels éléments.

3. Dispositif selon une ou plusieurs des revendications précédentes, **caractérisé en ce que** les surfaces d'appui (60) et au moins les zones entre deux surfaces d'appui (60) voisines forment une surface fermée et/ou les surfaces d'appui (60) sont formées sur des éléments de plaque (38).

4. Dispositif selon la revendication précédente, **caractérisé en ce que** les éléments de plaque (38) et/ou d'autres éléments du convoyeur comprennent des éléments de raccordement destinés à relier les éléments de plaque (38) aux autres éléments du convoyeur.

5. Dispositif selon une ou plusieurs des revendications précédentes, **caractérisé en ce que** la surface d'appui (60), un élément de butée et/ou au moins un élément de positionnement servant de moyen de positionnement, au moyen duquel la position relative du support de garniture (46) de la garniture de frein (44) à usiner est définie sur la surface d'appui, sont formés d'une seule pièce sur un élément de bande transporteuse (22), une bande transporteuse ou un élément de plaque (38).

6. Dispositif selon une ou plusieurs des revendications précédentes, **caractérisé en ce que** les surfaces d'appui (60) sont délimitées à chaque fois sur la face arrière par au moins un élément de butée faisant saillie vers le haut et dans lequel au moins un élément de positionnement est affecté à chaque surface d'appui (60), au moyen duquel la position relative du support de garniture (46) de la garniture de frein (44) à usiner sur la surface d'appui (60) est définie.

7. Dispositif selon la revendication précédente, **caractérisé en ce qu'**au moins un élément de butée est formé en tant qu'élément de positionnement.

8. Dispositif selon la revendication précédente, **caractérisé en ce que** les éléments de positionnement sont formés par une première paroi de délimitation (48) de la surface d'appui (60) s'étendant transversalement à la direction de transport F et de la surface d'appui (60) vers le haut et au moins une seconde paroi de délimitation (48) d'au moins une surface d'appui (60) s'étendant dans la direction de transport F, de la surface d'appui (60) vers le haut, ces éléments de positionnement étant formés au moins en partie de façon complémentaire au support de garniture (46) de la garniture de frein (44) à usiner.

9. Dispositif selon une ou plusieurs des revendications précédentes, **caractérisé en ce que** le convoyeur (16) comprend des rails de guidage (56) et des chariots (24) tournant sur paliers dans les rails de guidage (56).

10. Dispositif selon la revendication précédente, **caractérisé en ce que** le chariot (24) comprend des éléments de palier agissant dans la direction verticale et/ou dans la direction transversale.

11. Dispositif selon une ou plusieurs des revendications précédentes, **caractérisé en ce que** le convoyeur (16) est constitué d'un matériau non magnétisable.

12. Procédé d'usinage de garnitures de frein (44) montées sur des supports de garniture (46) comprenant au moins un poste d'usinage (12) et un convoyeur (16) permettant un transport circulant des surfaces d'appui (60) dans une direction de transport F rectiligne au moins par tronçons, selon lequel
a) un support de garniture (46) est disposé sur une surface d'appui (60), des moyens de positionnement étant en plus disposés périphériquement en association avec la surface d'appui (60), de telle sorte que les moyens de positionnement s'opposent à une torsion du support de garniture (46) par rapport à la surface d'appui (60) respective, des forces d'usinage étant exercées par au moins un poste d'usinage (12) sur les garnitures de frein (44) à usiner et agissant au moins en partie contre la direction de transport F, les moyens de positionnement étant configurés de telle sorte que la position du support de garniture (46) sur la surface d'appui (60) est clairement définie, sous l'action des forces d'usinage, grâce aux moyens de positionnement et les moyens de positionnement comprenant au moins une paroi de délimitation (48) arrière, qui s'étend au moins en partie transversalement à la direction de transport F, de la surface d'appui (60) vers le haut et sert d'appui contre une première surface latérale de référence (64) du support de garniture, et au moins deux parois de délimitation latérales (50) qui s'étendent au moins en partie dans la direction de transport F, depuis la surface d'appui (60 vers le haut, dont la géométrie et l'écartement sont adaptés à des secondes surfaces latérales de référence (66) du support de garniture,
b) la surface d'appui (60) en association avec le support de garniture (46) est transportée au moyen du convoyeur (16) au travers d'au moins un poste d'usinage (12), et
c) le support de garniture (46), une fois passé le au moins un poste d'usinage (12), à l'état usiné, est enlevé de la surface d'appui (60).
